# EUROPÄISCHE PATENTSCHRIFT

(11) **EP 1 940 534 B1**
(45) Veröffentlichungstag und Bekanntmachung des Hinweises auf die Patenterteilung: **28.06.2017**
(21) Anmeldenummer: 06807413.7
(22) Anmeldetag: 19.10.2006
(51) Int. Cl.: B01D 53/14

(54) **ABSORPTIONSMITTEL UND VERFAHREN ZUM ENTFERNEN VON KOHLENDIOXID AUS GASSTRÖMEN**
ABSORBENT AND METHOD FOR THE ELIMINATION OF CARBON DIOXIDE FROM GAS FLOWS
AGENT D'ABSORPTION ET PROCÉDÉ D'ÉLIMINATION DE DIOXYDE DE CARBONE PRÉSENT DANS DES FLUX GAZEUX

(30) Priorität: 20.10.2005 DE 102005050385
(43) Veröffentlichungstag der Anmeldung: 09.07.2008
(73) Patentinhaber: BASF SE, 67056 Ludwigshafen am Rhein (DE)
(72) Erfinder: ANDERS, Joachim-Thierry, 67161 Gönnheim (DE); MELDER, Johann-Peter, 67459 Böhl-Iggelheim (DE); ASPRION, Norbert, 67063 Ludwigshafen (DE); BRETTSCHNEIDER, Ole, 68167 Mannheim (DE); CLAUSEN, Iven, 68199 Mannheim (DE); ECK, Bernd, 68519 Viernheim (DE); LICHTFERS, Ute, 76187 Karlsruhe (DE)
(86) Internationale Anmeldenummer: PCT/EP2006/067586
(87) Internationale Veröffentlichungsnummer: WO 2007/045679

(56) Entgegenhaltungen:
- EP-A- 1 582 250
- EP-A2- 1 062 999
- WO-A-2005/087349

## Beschreibung

Die vorliegende Erfindung betrifft ein Absorptionsmittel zum Entfernen von Kohlendioxid aus Gasströmen und ein Verfahren unter Verwendung des Absorptionsmittels.

In zahlreichen Prozessen in der chemischen Industrie treten Fluidströme auf, die Sauergase, wie z. B. CO₂, H₂S, SO₂, CS₂, HCN, COS, NOₓ, Disulfide oder Mercaptane als Verunreinigungen enthalten. Bei diesen Fluidströmen kann es sich beispielsweise um Gasströme, wie Erdgas, Synthesegas, Raffineriegas, oder Reaktionsgase handeln, die bei der Oxidation organischer Materialien, wie beispielsweise organischer Abfälle, Kohle, Erdgas oder Erdöl, oder bei der Kompostierung organische Substanzen enthaltender Abfallstoffe entstehen.

Die Entfernung der Sauergase ist aus unterschiedlichen Gründen von besonderer Bedeutung. Beispielsweise muss der Gehalt an Schwefelverbindungen von Erdgas durch geeignete Aufbereitungsmaßnahmen unmittelbar an der Erdgasquelle reduziert werden, denn auch die Schwefelverbindungen bilden mit dem vom Erdgas häufig mitgeführten Wasser Säuren, die korrosiv wirken. Für den Transport des Erdgases in einer Pipeline müssen daher vorgegebene Grenzwerte der schwefelhaltigen Verunreinigungen eingehalten werden. Aus den bei der Oxidation organischer Materialien entstehenden Reaktionsgasen müssen die Sauergase entfernt werden, um die Emission von Gasen zu verhindern, die die Natur schädigen oder das Klima beeinflussen können.

Im industriellen Maßstab werden häufig wässrige Lösungen organischer Basen, z. B. Alkanolamine, als Absorptionsmittel eingesetzt. Beim Lösen von Sauergasen bilden sich dabei aus der Base und den Sauergasbestandteilen ionische Produkte. Das Absorptionsmittel kann durch Entspannen auf einen niedrigeren Druck oder Strippen regeneriert werden, wobei die Sauergase wieder freigesetzt und/oder mittels Dampf abgestrippt werden. Nach dem Regenerationsprozess kann das Absorptionsmittel wiederverwendet werden.

Die bekannten Absorptionsmittel eignen sich sehr gut zum Entsäuern von Kohlenwasserstoffströmen, wie Erdgas. Bestimmte Probleme treten bei der Behandlung sauerstoffhaltiger Fluide, z. B. von Rauchgasen, auf. Hierbei verschlechtert sich die Absorptionsfähigkeit des Absorptionsmittels langfristig und wird bei der Regeneration nicht vollständig wiedererlangt. Vermutlich ist die Gegenwart von molekularem Sauerstoff für eine oxidative Zersetzung der im Absorptionsmittel enthaltenen Amine verantwortlich. EP-A-1 582 250 beschreibt ein Absorptionsmittel mit verbesserter Oxidationsbeständigkeit und ein Verfahren unter Verwendung dieses Absorptionsmittels, das wenigstens ein Alkanolamin und wenigstens ein nicht-hydrochinoides Antioxidans umfasst, zum Entsäuern eines Fluidstroms, der Sauergase wie z.B. CO₂ enthält.

Der Erfindung liegt die Aufgabe zu Grunde, ein Absorptionsmittel und ein Verfahren zum Entsäuern von Fluidströmen anzugeben, wobei die Absorptionsfähigkeit des Absorptionsmittels langfristig erhalten bleibt.

Die Aufgabe wird gelöst durch ein Absorptionsmittel, das eine wässrige Lösung eines Amins der Formel I enthält,

HNR₂ (I)

worin ein oder beide Reste R für 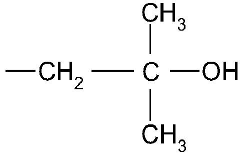 stehen und der andere Rest R für Wasserstoff steht.

In einer Ausführungsform handelt es sich bei der Verbindung der Formel I um 1-Amino-2-methyl-propan-2-ol, (CAS 2854-16-2; im folgenden: 1A2MP). In einer anderen Ausführungsform handelt es sich um Amino-di-tert-butylalkohol. Es wurde gefunden, dass beide Verbindungen eine überraschend hohe Sauerstoffstabilität zeigen.

Der erste Schritt der durch molekularen Sauerstoff induzierten Zersetzung ist vermutlich die Abstraktion eines Wasserstoffatoms vom Kohlenstoffatom in α-Position zur Aminogruppe. Amine, bei denen die α-Kohlenstoffatome ausschließlich von Wasserstoff verschiedene Substituenten tragen, sind sehr beständig gegen oxidative Zersetzung. Im 1A2MP ist das Kohlenstoffatom in α-Position zur Aminogruppe ein primäres Kohlenstoffatom, d. h. es trägt zwei Wasserstoffatome. Überraschenderweise erwies sich diese Struktur aber trotzdem als sehr beständig gegen die Einwirkung von molekularem Sauerstoff. Die Stabilität gegen Sauerstoff-induzierte Zersetzung ist besonders für Rauchgas- Wäschen entscheidend, so dass das neue Absorptionsmittel hier eine erhebliche Verbesserung darstellt.

Das erfindungsgemäße Absorptionsmittel kann neben dem Amin der Formel I ein oder mehrere weitere Amine enthalten, um z. B. die Beladbarkeit des Absorptionsmittels mit Kohlendioxid oder anderen Sauergasbestandteilen, die Stoffübergangsgeschwindigkeit für Kohlendioxid oder andere Sauergasbestandteile, und/oder andere Faktoren zu optimieren. Das oder die weiteren Amine umfassen gewöhnlich 4 bis 12 Kohlenstoffatome.

Das Absorptionsmittel liegt üblicherweise in Form einer wässrigen Lösungen mit einem Gesamtamingehalt von im Allgemeinen 10 bis 65 Gew.-%, vorzugsweise 25 bis 60 Gew.-%, vor. Auf das Amin der Formel I entfallen im allgemeinen wenigstens 1 Gew.-%, vorzugsweise wenigstens 5 Gew.-%, bezogen auf das Absorptionsmittel.

Die Lösungen können zusätzlich zu Wasser physikalische Lösungsmittel enthalten, die z. B. ausgewählt sind unter Cyclotetramethylensulfon (Sulfolan) und dessen Derivaten, aliphatischen Säureamiden (Acetylmorpholin, N-Formylmorpholin), N-alkylierten Pyrrolidonen und entsprechenden Piperidonen, wie N-Methylpyrrolidon (NMP), Propylencarbonat, Methanol, Dialkylethern von Polyethylenglykolen und Gemischen davon.

Das erfindungsgemäße Absorptionsmittel kann weitere funktionelle Bestandteile enthalten, wie Stabilisatoren, insbesondere Antioxidantien, vgl. z. B. die DE 102004011427. Ein Zusatz von Säuren, wie Phosphorsäure, Ameisensäure oder Sulfonsäuren, kann geeignet sein, die zur Regeneration des beladenen Absorptionsmittels erforderliche Energie herabzusetzen.

Geeignete Amine, die neben dem Amin der Formel I im erfindungsgemäßen Absorptionsmittel vorliegen können, sind z. B. ausgewählt unter
(A) tertiären Aminen (hierunter werden tertiäre Monoamine oder Polyamine mit ausschließlich tertiären Aminogruppen verstanden);
(B) primären Aminen, worin die Aminogruppe an ein tertiäres Kohlenstoffatom gebunden ist;
(C) sekundären Aminen, worin die Aminogruppe an wenigstens ein sekundäres oder tertiäres Kohlenstoffatom gebunden ist;
und deren Gemischen.

Bevorzugte derartige Amine sind ausgewählt unter
(A) tertiären Aminen mit drei Hydroxyalkylgruppen am Stickstoffatom, worin die Aminogruppe durch wenigstens zwei Kohlenstoffatome von den Hydroxylgruppen getrennt ist, wie Triethanolamin (TEA);
   tertiären Aminen mit einer oder zwei Hydroxyalkylgruppen und zwei oder einer unsubstituierten Alkylgruppe am Stickstoffatom, worin die Aminogruppe durch wenigstens zwei Kohlenstoffatome von der (den) Hydroxylgruppe(n) getrennt ist,
   wie Diethylethanolamin (DEEA), Methyldiethanolamin (MDEA), 3-Dimethylamino-1-propanol (DIMAP), Dimethylethanolamin (DMEA), Methyldiisopropanolamin (MDIPA);
   Diaminen mit zwei tertiären Aminogruppen;
   wie N,N,N',N'-Tetramethylethylendiamin, N,N-Diethyl-N',N'-dimethylethylendiamin, N,N,N',N'-Tetraethylethylendiamin, N,N,N',N'-Tetramethyl-1,3-propandiamin und N,N,N',N'-Tetraethyl-1,3-propandiamin sowie Bis(dimethylaminoethyl)ether.
(B) primären Aminen mit wenigstens einer Hydroxylgruppe, worin die Aminogruppe an ein tertiäres Kohlenstoffatom gebunden und durch wenigstens zwei Kohlenstoffatome von der Hydroxylgruppe getrennt ist,
   wie 2-Amino-2-methyl-1-propanol (AMP), 3-Amino-3-methyl-2-pentanol, 2,3-Dimethyl-3-amino-1-butanol, 2-Amino-2-ethyl-1-butanol, 2-Amino-2-methyl-3-pentanol, 2-Amino-2-methyl-1-butanol, 3-Amino-3-methyl-1-butanol, 3-Amino-3-methyl-2-butanol, 2-Amino-2,3-dimethyl-3-butanol, 2-Amino-2,3-dimethyl-1-butanol und 2-Amino-2-methyl-1-pentanol,
   wovon 2-Amino-2-methyl-1-propanol bevorzugt ist;
(C) sekundären Aminen mit wenigstens einer Hydroxylgruppe, worin die Aminogruppe an wenigstens ein sekundäres oder tertiäres Kohlenstoffatom gebunden und durch wenigstens zwei Kohlenstoffatome von der Hydroxylgruppe getrennt ist,
wie 2-(Isopropylamino)ethanol, 2(sec-Butylamino)ethanol, 2-Piperidinethanol;
und deren Gemischen.

Bevorzugte Absorptionsmittel enthalten
(i) 1 bis 30 Gew.-%, vorzugsweise 5 bis 25 Gew.-%, Amin der Formel I und
(ii) 10 bis 60 Gew.-%, vorzugsweise 15 bis 50 Gew.-%, eines oder mehrerer Amine (A) bis (C), jeweils bezogen auf das Gesamtgewicht des Absorptionsmittels, mit der Maßgabe, dass der maximale Gesamtamingehalt des Absorptionsmittels 65 Gew.-% beträgt.

In anderen Ausführungsformen enthält das erfindungsgemäße Absorptionsmittel neben dem Amin der Formel I wenigstens ein Amin, das ausgewählt ist unter
(D) primären oder sekundären Alkanolaminen;
(E) Alkylendiaminen;
(F) Polyalkylenpolyaminen;
(G) Aminen der allgemeinen Formel

   R¹-NH-R²-NH₂

   worin R¹ für C₁-C₆-Alkyl steht und R² für C₂-C₆-Alkylen steht;
(H) cyclischen Aminen mit einem 5-, 6- oder 7-gliedrigen gesättigten Ring, der eine NH-Gruppe und gegebenenfalls ein weiteres Heteroatom, insbesondere ein Sauerstoff- oder Stickstoffatom, enthält;
und deren Gemischen.

Besonders geeignete derartige Amin sind ausgewählt unter
(D) Monoethanolamin (MEA), Diethanolamin (DEA), Diisopropylamin (DIPA), Aminoethoxyethanol (AEE);
(E) Hexamethylendiamin;
(F) Diethylentriamin; Triethylentetramin, 3,3-Iminobispropylamine; vorzugsweise Diethylentriamin;
(G) 3-Methylaminopropylamin (MAPA);
(H) Piperazin, 2-Methylpiperazin, N-Methylpiperazin, N-Ethylpiperazin, N-Aminoethylpiperazin, Homopiperazin, Piperidin, Morpholin;
und deren Gemischen.

Bevorzugte Absorptionsmittel enthalten
(i) 20 bis 60 Gew.-%, vorzugsweise 25 bis 50 Gew.-%, Amin der Formel I und
(ii) 1 bis 25 Gew.-%, vorzugsweise 3 bis 20 Gew.-%, eines oder mehrerer Amine (D) bis (H), jeweils bezogen auf das Gesamtgewicht des Absorptionsmittels, mit der Maßgabe, dass der maximale Gesamtamingehalt des Absorptionsmittels 65 Gew.-% beträgt.

Die Erfindung betrifft auch ein Verfahren zum Entfernen von Kohlendioxid aus einem Gasstrom, wobei man den Gasstrom mit einem flüssigen Absorptionsmittel in Kontakt bringt, das eine wässrige Lösung eines Amins der Formel I enthält.

Neben Kohlendioxid werden andere Sauergase und/oder deren Vorläuferverbindungen, wie z. B. H₂S, SO₂, CS₂, HCN, COS, NOₓ, Disulfide oder Mercaptane, aus dem Gasstrom teilweise oder vollständig entfernt.

Das Verfahren eignet sich besonders für Gasströme, in denen der Partialdruck des Kohlendioxids im Gasstrom weniger als 500 mbar, bevorzugt weniger als 200 mbar, meist 20 bis 150 mbar, beträgt.

Bei dem Gasstrom handelt es sich bevorzugt um einen Gasstrom, der auf folgende Weise gebildet wird:
a) Oxidation organischer Substanzen z. B. Rauchgase (flue gas),
b) Kompostierung und Lagerung organische Substanzen enthaltender Abfallstoffe, oder
c) bakterielle Zersetzung organischer Substanzen.

Die Oxidation kann unter Flammenerscheinung, d. h. als herkömmliche Verbrennung, oder als Oxidation ohne Flammenerscheinung, z. B. in Form einer katalytischen Oxidation oder Partialoxidation, durchgeführt werden. Organische Substanzen, die der Verbrennung unterworfen werden, sind üblicherweise fossile Brennstoffe wie Kohle, Erdgas, Erdöl, Benzin, Diesel, Raffinate oder Kerosin, Biodiesel oder Abfallstoffe mit einem Gehalt an organischen Substanzen. Ausgangsstoffe der katalytischen (Partial-) Oxidation sind z. B. Methanol oder Methan, das zu Ameisensäure oder Formaldehyd umgesetzt werden kann.

Abfallstoffe, die der Oxidation, der Kompostierung oder Lagerung unterzogen werden, sind typischerweise Hausmüll, Kunststoffabfälle oder Verpackungsmüll.

Die Verbrennung der organische Substanzen erfolgt meistens in üblichen Verbrennungsanlagen mit Luft. Die Kompostierung und Lagerung organischer Substanzen enthaltender Abfallstoffe erfolgt im Allgemeinen auf Mülldeponien. Das Abgas bzw. die Abluft derartiger Anlagen kann vorteilhaft nach dem erfindungsgemäßen Verfahren behandelt werden.

Als organische Substanzen für bakterielle Zersetzung werden üblicherweise Stalldung, Stroh, Jauche, Klärschlamm, Fermentationsrückstände und dergleichen verwendet. Die bakterielle Zersetzung erfolgt z.B. in üblichen Biogasanlagen. Die Abluft derartiger Anlagen kann vorteilhaft nach dem erfindungsgemäßen Verfahren behandelt werden.

Das Verfahren eignet sich auch zur Behandlung der Abgase von Brennstoffzellen oder chemischer Syntheseanlagen, die sich einer (Partial-) Oxidation organischer Substanzen bedienen.

Daneben kann das erfindungsgemäße Verfahren natürlich auch angewendet werden, um unverbrannte fossile Gase, wie Erdgas, z. B. so genannte Coal-seam-Gase, d. h. bei der Förderung von Kohle anfallende Gase; die gesammelt und komprimiert werden, zu behandeln.

Im Allgemeinen enthalten diese Gasströme bei Normalbedingungen weniger als 50 mg/m³ Schwefeldioxid.

Die Ausgangsgase können entweder den Druck aufweisen, der etwa dem Druck der Umgebungsluft entspricht, also z. B. Normaldruck oder einen Druck, der vom Normaldruck um bis zu 1 bar abweicht.

Zur Durchführung des erfindungsgemäßen Verfahrens geeignete Vorrichtungen umfassen wenigstens eine Waschkolonne, z. B. Füllkörper, Packungs- und Bodenkolonnen, und/oder andere Absorber wie Membrankontaktoren, Radialstromwäscher, Strahlwäscher, Venturi-Wäscher und Rotations-Sprühwäscher. Die Behandlung des Gasstroms mit dem Absorptionsmittel erfolgt dabei bevorzugt in einer Waschkolonne im Gegenstrom. Der Gasstrom wird dabei im Allgemeinen in den unteren Bereich und das Absorptionsmittel in den oberen Bereich der Kolonne eingespeist.

Geeignet zur Durchführung des erfindungsgemäßen Verfahrens sind auch Waschkolonnen aus Kunststoff, wie Polyolefinen oder Polytetrafluorethylen, oder Waschkolonnen, deren innere Oberfläche ganz oder teilweise mit Kunststoff oder Gummi ausgekleidet ist. Weiterhin eignen sich Membrankontaktoren mit Kunststoffgehäuse.

Die Temperatur des Absorptionsmittels beträgt im Absorptionsschritt im Allgemeinen etwa 30 bis 70°C, bei Verwendung einer Kolonne beispielsweise 30 bis 60°C am Kopf der Kolonne und 40 bis 70°C am Boden der Kolonne. Es wird ein an sauren Gasbestandteilen armes, d. h. ein an diesen Bestandteilen abgereichertes Produktgas (Beigas) und ein mit sauren Gasbestandteilen beladenes Absorptionsmittel erhalten.

Aus dem mit den sauren Gasbestandteilen beladenen Absorptionsmittel kann das Kohlendioxid in einem Regenerationsschritt freigesetzt werden, wobei ein regeneriertes Absorptionsmittel erhalten wird. Im Regenerationsschritt wird die Beladung des Absorptionsmittels verringert und das erhaltene regenerierte Absorptionsmittel wird vorzugsweise anschließend in den Absorptionsschritt zurückgeführt.

Im Allgemeinen regeneriert man das beladene Absorptionsmittel durch
a) Erwärmung, z. B. auf 70 bis 120 °C,
b) Entspannung,
c) Strippen mit einem inerten Fluid
oder eine Kombination zweier oder aller dieser Maßnahmen.

In der Regel wird das beladene Absorptionsmittel zur Regeneration erwärmt und das freigesetzte Kohlendioxid wird z. B. in einer Desorptionskolonne abgetrennt. Bevor das regenerierte Absorptionsmittel wieder in den Absorber eingeführt wird, wird es auf eine geeignete Absorptionstemperatur abgekühlt. Um die im heißen regenerierten Absorptionsmittel enthaltene Energie auszunutzen, ist es bevorzugt, das beladene Absorptionsmittel aus dem Absorber durch Wärmetausch mit dem heißen regenerierten Absorptionsmittel vorzuerwärmen. Durch den Wärmetausch wird das beladene Absorptionsmittel auf eine höhere Temperatur gebracht, so dass im Regenerationsschritt ein geringerer Energieeinsatz erforderlich ist. Durch den Wärmetausch kann auch bereits eine teilweise Regenerierung des beladenen Absorptionsmittels unter Freisetzung von Kohlendioxid erfolgen. Der erhaltene gas-flüssig-gemischtphasige Strom wird in ein Phasentrenngefäß geleitet, aus dem das Kohlendioxid abgezogen wird; die Flüssigphase wird zur vollständigen Regeneration des Absorptionsmittels in die Desorptionskolonne geleitet.

Vielfach wird das in der Desorptionskolonne freigesetzte Kohlendioxid anschließend verdichtet und z. B. einem Drucktank oder einer Sequestrierung zugeführt. In diesen Fällen kann es vorteilhaft sein, die Regeneration des Absorptionsmittels bei einem höheren Druck, z. B. 2 bis 10 bar, vorzugsweise 2,5 bis 5 bar durchzuführen. Das beladene Absorptionsmittel wird hierzu mittels einer Pumpe auf den Regenerationsdruck verdichtet und in die Desorptionskolonne eingebracht. Das Kohlendioxid fällt auf diese Weise auf einem höheren Druckniveau an. Die Druckdifferenz zum Druckniveau des Drucktanks ist geringer und man kann unter Umständen eine Kompressionsstufe einsparen. Ein höherer Druck bei der Regeneration bedingt eine höhere Regenerationstemperatur. Bei höherer Regenerationstemperatur kann eine geringere Restbeladung des Absorptionsmittel erreicht werden. Die Regenerationstemperatur ist in der Regel nur durch die thermische Stabilität des Absorptionsmittels begrenzt.

Vor der erfindungsgemäßen Absorptionsmittel-Behandlung wird das Rauchgas vorzugsweise einer Wäsche mit einer wässrigen Flüssigkeit, insbesondere mit Wasser, unterzogen, um das Rauchgas abzukühlen und zu befeuchten (quenchen). Bei der Wäsche können auch Stäube oder gasförmige Verunreinigungen wie Schwefeldioxid entfernt werden.

Die Erfindung wird anhand der beigefügten Figuren und der nachfolgenden Beispiele näher erläutert.

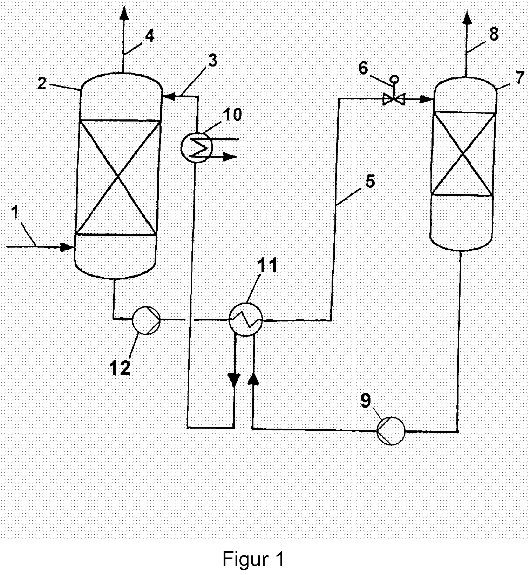

Fig. 1 ist eine schematische Darstellung einer zur Durchführung des erfindungsgemäßen Verfahrens geeigneten Anlage.

Gemäß Fig. 1 wird über eine Zuleitung 1 ein geeignet vorbehandeltes, Kohlendioxid enthaltendes Verbrennungsgas in einem Absorber 2 mit dem regenerierten Absorptionsmittel, das über die Absorptionsmittelleitung 3 zugeführt wird, im Gegenstrom in Kontakt gebracht. Das Absorptionsmittel entfernt Kohlendioxid durch Absorption aus dem Verbrennungsgas; dabei wird über eine Abgasleitung 4 ein an Kohlendioxid armes Reingas gewonnen. Der Absorber 2 kann oberhalb des Absorptionsmitteleintritts Rückwaschböden oder Rückwaschsektionen, die vorzugsweise mit Packungen ausgerüstet sind, aufweisen (nicht dargestellt), wo mit Hilfe von Wasser oder Kondensat mitgeführtes Absorptionsmittel aus dem CO₂-abgereicherten Gas abgetrennt wird. Die Flüssigkeit auf dem Rückwaschboden wird geeigneterweise über einen externen Kühler recycliert.

Über eine Absorptionsmittelleitung 5, eine Pumpe 12, einen Solvent-Solvent-Wärmetauscher 11, in dem das mit Sauergas beladene Absorptionsmittel mit der Wärme des aus dem Sumpf der Desorptionskolonne 7 austretenden, regenerierten Absorptionsmittels aufgeheizt wird, und ein Drosselventil 6 wird das mit Kohlendioxid beladene Absorptionsmittel einer Desorptionskolonne 7 zugeleitet. Im unteren Teil der Desorptionskolonne 7 wird das beladene Absorptionsmittel mittels eines (nicht dargestellten) Aufheizers erwärmt und regeneriert. Das dabei freigesetzte Kohlendioxid verlässt die Desorptionskolonne 7 über die Abgasleitung 8. Die Desorptionskolonne 7 kann oberhalb des Absorptionsmitteleintritts Rückwaschböden oder Rückwaschsektionen, die vorzugsweise mit Packungen ausgerüstet sind, aufweisen (nicht dargestellt), wo mit Hilfe von Wasser oder Kondensat mitgeführtes Absorptionsmittel aus dem freigesetzten CO₂ abgetrennt wird. In der Leitung 8 kann ein Wärmetauscher mit Kopfverteiler oder Kondensator vorgesehen sein. Das regenerierte Absorptionsmittel wird anschließend mittels einer Pumpe 9 über den Solvent-Solvent-Wärmetauscher 11, in dem das regenerierte Absorptionsmittel das mit Sauergas beladenen Absorptionsmittel aufheizt und selbst dabei abkühlt, und einen Wärmetauscher 10 der Absorptionskolonne 2 wieder zugeführt. Um die Akkumulierung von absorbierten Substanzen, die bei der Regenerierung nicht oder unvollständig ausgetrieben werden, oder von Zersetzungsprodukten im Absorptionsmittel zu vermeiden, kann man einen Teilstrom des aus der Desorptionskolonne 7 abgezogenen Absorptionsmittels einem Verdampfer zuführen, in dem schwerflüchtige Neben- und Zersetzungsprodukte als Rückstand anfallen und das reine Absorptionsmittel als Brüden abgezogen wird. Die kondensierten Brüden werden wieder dem Absorptionsmittelkreislauf zugeführt. Zweckmäßigerweise kann man dem Teilstrom eine Base, wie Kaliumhydroxid, zusetzen, welches z. B. mit Sulfat- oder Chloridionen schwerflüchtige Salze bildet, die zusammen mit dem Verdampferrückstand dem System entzogen werden.

### Beispiele

Die Beständigkeit verschiedener Amine gegen die Einwirkung von Sauerstoff wurde wie folgt ermittelt:
In einem 100 ml-Kolben wurden in etwa 60 ml Amin bei 120°C 6 Tage lang 5 NI Luft /h bei Atmosphärendruck über eine Fritte eingeperlt. Der Dampfraum über der Lösung wurde mit 10 NI N₂/ h inertisiert. Der Kolben war mit einem Rückflusskühler ausgestattet, so dass ausgestrippte Substanz weitgehend kondensiert und rückgeführt wurde.

Es wurden Proben der frischen Lösung und der 6 Tage lang behandelten Lösung gezogen und per GC analysiert.
GC-Methode: 30 m RTX-5 Amine, (0.32 mm, 1.5 µm), 50°C - 3 min - 7°C/min - 280°C-20 min
Probe 1:
   2-Amino-2-methyl-propan-1-ol (Vergleich)
   Konzentration der Originallösung: 93,5%
   Konzentration nach 6 Tagen Versuch: 93,4%
Probe 2:
   1-Amino-2-methyl-propan-2-ol
   Konzentration der Originallösung: 99,8%
   Konzentration nach 6 Tagen Versuch: 98,2%
Probe 3:
   Monoethanolamin (Vergleich)
   Konzentration der Originallösung: 100 %
   Konzentration nach 6 Tagen Versuch: 32,8%
Probe 4:
   Methyldiethanolamin (Vergleich)
   Konzentration der Originallösung: 99,3%
   Konzentration nach 6 Tagen Versuch: 72,4%
Probe 5:
   Methylmonoethanolamin (Vergleich)
   Konzentration der Originallösung: 99,6%
   Konzentration nach 6 Tagen Versuch: 75,5%

## Patentansprüche

1. Absorptionsmittel zum Entfernen von Kohlendioxid aus Gasströmen, enthaltend eine wässrige Lösung eines Amins der Formel I
HNR₂ (I)
worin ein oder beide Reste R für 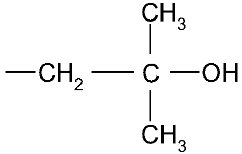 stehen und der andere Rest R für Wasserstoff steht.

2. Absorptionsmittel nach Anspruch 1, außerdem enthaltend wenigstens ein Amin, das ausgewählt ist unter
(A) tertiären Aminen;
(B) primären Aminen, worin die Aminogruppe an ein tertiäres Kohlenstoffatom gebunden ist;
(C) sekundären Aminen, worin die Aminogruppe an wenigstens ein sekundäres oder tertiäres Kohlenstoffatom gebunden ist; und deren Gemischen.

3. Absorptionsmittel nach Anspruch 2, enthaltend wenigstens ein Amin, das ausgewählt ist unter
(A) tertiären Aminen mit einer oder zwei Hydroxyalkylgruppen und zwei oder einer unsubstituierten Alkylgruppe am Stickstoffatom, worin die Aminogruppe durch wenigstens zwei Kohlenstoffatome von der (den) Hydroxylgruppe(n) getrennt ist;
(B) primären Aminen mit wenigstens einer Hydroxylgruppe, worin die Aminogruppe an ein tertiäres Kohlenstoffatom gebunden und durch wenigstens zwei Kohlenstoffatome von der Hydroxylgruppe getrennt ist;
(C) sekundären Aminen mit wenigstens einer Hydroxylgruppe, worin die Aminogruppe an wenigstens ein sekundäres oder tertiäres Kohlenstoffatom gebunden und durch wenigstens zwei Kohlenstoffatome von der Hydroxylgruppe getrennt ist;
und deren Gemischen.

4. Absorptionsmittel nach Anspruch 2 oder 3, enthaltend 1 bis 30 Gew.-% Amin der Formel I und 10 bis 60 Gew.-% eines oder mehrerer Amine (A) bis (C), bezogen auf das Gesamtgewicht des Absorptionsmittels, mit der Maßgabe, dass der maximale Gesamtamingehalt des Absorptionsmittels 65 Gew.-% beträgt.

5. Absorptionsmittel nach Anspruch 1, außerdem enthaltend wenigstens ein Amin, das ausgewählt ist unter
(D) primären oder sekundären Alkanolaminen;
(E) Alkylendiaminen;
(F) Polyalkylenpolyaminen;
(G) Aminen der allgemeinen Formel
R¹-NH-R²-NH₂
worin R¹ für C₁-C₆-Alkyl steht und R² für C₂-C₆-Alkylen steht;
(H) cyclischen Aminen mit einem 5-, 6- oder 7-gliedrigen gesättigten Ring, der eine NH-Gruppe und gegebenenfalls ein weiteres Heteroatom, insbesondere ein Sauerstoff- oder Stickstoffatom, enthält;
und deren Gemischen.

6. Absorptionsmittel nach Anspruch 4, enthaltend wenigstens ein Amin, das ausgewählt ist unter
(D) Monoethanolamin, Diethanolamin, Methylethanolamin;
(E) Hexamethylendiamin;
(F) Diethylentriamin;
(G) 3-Methylaminopropylamin;
(H) Piperazin, 2-Methylpiperazin, N-Methylpiperazin, N-Ethylpiperazin, N-Aminoethylpiperazin, Homopiperazin, Piperidin, Morpholin;
und deren Gemischen.

7. Absorptionsmittel nach Anspruch 5 oder 6, enthaltend 20 bis 60 Gew.-% Amin der Formel I und 1 bis 25 Gew.-% eines oder mehrerer Amine (D) bis (H), bezogen auf das Gesamtgewicht des Absorptionsmittels, mit der Maßgabe, dass der maximale Gesamtamingehalt des Absorptionsmittels 65 Gew.-% beträgt.

8. Verfahren zum Entfernen von Kohlendioxid aus einem Gasstrom, wobei man den Gasstrom mit einem flüssigen Absorptionsmittel in Kontakt bringt, das eine wässrige Lösung eines Amins der Formel I enthält,
HNR₂ (I)
worin ein oder beide Reste R für 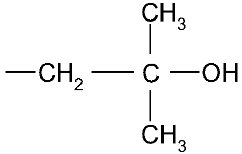 stehen und der andere Rest R für Wasserstoff steht.

9. Verfahren nach Anspruch 8, wobei der Partialdruck des Kohlendioxids im Gasstrom weniger als 500 mbar beträgt.

10. Verfahren nach Anspruch 8 oder 9, wobei der Gasstrom
a) der Oxidation organischer Substanzen,
b) der Kompostierung oder Lagerung organischer Substanzen enthaltender Abfallstoffe, oder
c) der bakteriellen Zersetzung organischer Substanzen
entstammt.

11. Verfahren nach einem der Ansprüche 8 bis 10, wobei man das beladene Absorptionsmittel durch
a) Erwärmung,
b) Entspannung,
c) Strippen mit einem inerten Fluid
oder eine Kombination zweier oder aller dieser Maßnahmen regeneriert.

## Claims

1. An absorption medium for removing carbon dioxide from gas streams which comprises an aqueous solution of an amine of the formula I
HNR₂ (I)
where one or both radicals R are 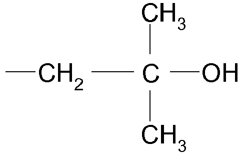 and the other radical R is hydrogen.

2. The absorption medium according to claim 1, in addition comprising at least one amine which is selected from
(A) tertiary amines;
(B) primary amines, where the amino group is bound to a tertiary carbon atom;
(C) secondary amines, where the amino group is bound to at least one secondary or tertiary carbon atom;
and mixtures thereof.

3. The absorption medium according to claim 2, comprising at least one amine which is selected from
(A) tertiary amines having one or two hydroxyalkyl groups and two or one unsubstituted alkyl groups on the nitrogen atom, where the amino group is separated from the hydroxyl group(s) by at least two carbon atoms;
(B) primary amines having at least one hydroxyl group, where the amino group is bound to a tertiary carbon atom and is separated from the hydroxyl group by at least two carbon atoms;
(C) secondary amines having at least one hydroxyl group, where the amino group is bound to at least one secondary or tertiary carbon atom and is separated from the hydroxyl group by at least two carbon atoms;
and mixtures thereof.

4. The absorption medium according to claim 2 or 3, comprising 1 to 30% by weight of amine of the formula I and 10 to 60% by weight of one or more amines (A) to (C), based on the total weight of the absorption medium, with the proviso that the maximum total amine content of the absorption medium is 65% by weight.

5. The absorption medium according to claim 1, in addition comprising at least one amine which is selected from
(D) primary or secondary alkanolamines;
(E) alkylenediamines;
(F) polyalkylenepolyamines;
(G) amines of the general formula
R¹-NH-R²-NH₂
where R¹ is C₁-C₆-alkyl and R² is C₂-C₆-alkylene;
(H) cyclic amines having a 5-, 6- or 7-membered saturated ring which comprises an NH group and optionally a further heteroatom, in particular an oxygen or nitrogen atom;
and mixtures thereof.

6. The absorption medium according to claim 4, comprising at least one amine which is selected from
(D) monoethanolamine, diethanolamine, methylethanolamine;
(E) hexamethylenediamine;
(F) diethylenetriamine;
(G) 3-methylaminopropylamine;
(H) piperazine, 2-methylpiperazine, N-methylpiperazine, N-ethylpiperazine, N-aminoethylpiperazine, homopiperazine, piperidine, morpholine; and mixtures thereof.

7. The absorption medium according to claim 5 or 6, comprising 20 to 60% by weight of amine of the formula I and 1 to 25% by weight of one or more amines (D) to (H), based on the total weight of the absorption medium, with the proviso that the maximum total amine content of the absorption medium is 65% by weight.

8. A method for removing carbon dioxide from a gas stream, the gas stream being brought into contact with a liquid absorption medium which comprises an aqueous solution of an amine of the formula I,
HNR₂ (I)
where one or both radicals R are 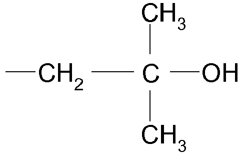 and the other radical R is hydrogen.

9. The method according to claim 8, the partial pressure of the carbon dioxide in the gas stream being less than 500 mbar.

10. The method according to claim 8 or 9, the gas stream originating from
a) the oxidation of organic substances,
b) the composting or storage of waste materials comprising organic substances, or
c) the bacterial decomposition of organic substances.

11. The method according to one of claims 8 to 10, the loaded absorption medium being regenerated by
a) heating,
b) expanding,
c) stripping with an inert fluid
or a combination of two or all of these measures.

## Revendications

1. Agent d'absorption pour l'élimination de dioxyde de carbone de courants gazeux, contenant une solution aqueuse d'une amine de formule I
HNR₂ (I)
dans laquelle l'un des ou les deux radicaux R représentent 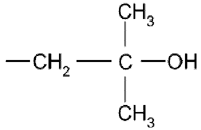 et l'autre radical R représente l'hydrogène.

2. Agent d'absorption selon la revendication 1, contenant en outre au moins une amine, qui est choisie parmi :
(A) les amines tertiaires ;
(B) les amines primaires dans lesquelles le groupe amino est relié à un atome de carbone tertiaire ;
(C) les amines secondaires dans lesquelles le groupe amino est relié à au moins un atome de carbone secondaire ou tertiaire ;
et leurs mélanges.

3. Agent d'absorption selon la revendication 2, contenant au moins une amine, qui est choisie parmi :
(A) les amines tertiaires contenant un ou deux groupes hydroxyalkyle et deux ou un groupe alkyle non substitué sur l'atome d'azote, dans lesquelles le groupe amino est séparé par au moins deux atomes de carbone du ou des groupes hydroxyle ;
(B) les amines primaires contenant au moins un groupe hydroxyle, dans lesquelles le groupe amino est relié à un atome de carbone tertiaire et séparé par au moins deux atomes de carbone du groupe hydroxyle ;
(C) les amines secondaires contenant au moins un groupe hydroxyle, dans lesquelles le groupe amino est relié à au moins un atome de carbone secondaire ou tertiaire et séparé par au moins deux atomes de carbone du groupe hydroxyle ;
et leurs mélanges.

4. Agent d'absorption selon la revendication 2 ou 3, contenant 1 à 30 % en poids d'amine de formule I et 10 à 60 % en poids d'une ou de plusieurs amines (A) à (C), par rapport au poids total de l'agent d'absorption, à condition que la teneur totale en amines maximale de l'agent d'absorption soit de 65 % en poids.

5. Agent d'absorption selon la revendication 1, contenant en outre au moins une amine, qui est choisie parmi :
(D) les alcanolamines primaires ou secondaires ;
(E) les alkylène-diamines ;
(F) les polyalkylène-polyamines ;
(G) les amines de formule générale
R¹-NH-R²-NH₂
dans laquelle R¹ représente alkyle en C₁-C₆ et R² représente alkylène en C₂-C₆ ;
(H) les amines cycliques contenant un cycle saturé à 5, 6 ou 7 éléments, qui contient un groupe NH et éventuellement un hétéroatome supplémentaire, notamment un atome d'oxygène ou d'azote ;
et leurs mélanges.

6. Agent d'absorption selon la revendication 4, contenant au moins une amine, qui est choisie parmi :
(D) la monoéthanolamine, la diéthanolamine, la méthyléthanolamine ;
(E) l'hexaméthylène-diamine ;
(F) la diéthylène-triamine ;
(G) la 3-méthylaminopropylamine ;
(H) la pipérazine, la 2-méthylpipérazine, la N-méthylpipérazine, la N-éthylpipérazine, la N-aminoéthylpipérazine, l'homopipérazine, la pipéridine, la morpholine ;
et leurs mélanges.

7. Agent d'absorption selon la revendication 5 ou 6, contenant 20 à 60 % en poids d'amine de formule I et 1 à 25 % en poids d'une ou de plusieurs amines (D) à (H), par rapport au poids total de l'agent d'absorption, à condition que la teneur totale en amines maximale de l'agent d'absorption soit de 65 % en poids.

8. Procédé d'élimination de dioxyde de carbone d'un courant gazeux, selon lequel le courant gazeux est mis en contact avec un agent d'absorption liquide qui contient une solution aqueuse d'une amine de formule I
HNR₂ (I)
dans laquelle l'un des ou les deux radicaux R représentent 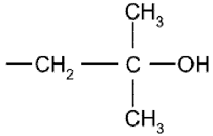 et l'autre radical R représente l'hydrogène.

9. Procédé selon la revendication 8, dans lequel la pression partielle du dioxyde de carbone dans le courant gazeux est inférieure à 500 mbar.

10. Procédé selon la revendication 8 ou 9, dans lequel le courant gazeux provient
a) de l'oxydation de substances organiques,
b) du compostage ou du stockage de déchets contenant des substances organiques ou
c) de la décomposition bactérienne de substances organiques.

11. Procédé selon l'une quelconque des revendications 8 à 10, dans lequel l'agent d'absorption chargé est régénéré par
a) chauffage,
b) détente,
c) extraction avec un fluide inerte
ou une combinaison de deux de ou toutes ces mesures.
